# EUROPÄISCHE PATENTANMELDUNG

(11) **EP 0 795 289 A1**
(43) Veröffentlichungstag der Anmeldung: **17.09.1997**
(21) Anmeldenummer: 97103997.9
(22) Anmeldetag: 11.03.1997
(51) Int. Cl.: A47J 43/07

(54) **Sahneeinsatzmitnehmer**

(30) Priorität: 13.03.1996 DE 29604547 U
(71) Anmelder: VORWERK & CO. INTERHOLDING GmbH, D-42275 Wuppertal (DE)
(72) Erfinder: Delgado, Antonio, 85354 Freising (DE); Dieudonné, Stephan, 44628 Herne (DE); Höltgen, Klemens, 42569 Solingen (DE); Thode, Jürgen, 42489 Wülfrath (DE)

(57) **Zusammenfassung**

Die Erfindung betrifft einen Mischaufsatz für den Messereinsatz eines Haushaltsmixgerätes, insbesondere beheizbarer Mixgeräte, mittels dem Sahne und/oder Eiweiß aufgeschlagen wird, indem Luft in das Fluid eingearbeitet und somit eine homogene Konsistenz erzeugt wird. Um einen gut wechselbaren und selbstreinigenden Mischaufsatz zu schaffen wird vorgeschlagen, daß oberhalb der Schneidmesser (2a, 2b) eine formschlüssig dem Messereinsatz (3) verbindungseinheitliche zugeordnete Steckaufnahme (4) zur drehrichtungsabhängigen und selbstarretierenden Aufnahme des Mischaufsatzes (1) angeordnet ist, der sich rotationssymmetrisch zu beiden Seiten der Messerachse (5) vertikal durch die Schneidmesser (2a, 2b) erstreckt und eine Vielzahl achsrichtungsfluchtender Lamellen (9) aufweist.

## Beschreibung

Die Neuerung betrifft einen Mischaufsatz für den Messereinsatz eines Haushaltsmixgerätes, insbesondere beheizbarer Mixgeräte, mittels dem Sahne und/oder Eiweiß aufgeschlagen wird, indem Luft in das Fluid eingearbeitet und somit eine homogene Konsistenz erzeugt wird.

Derartige Mischaufsätze haben den Zweck, in einem Haushaltsmixer, der normalerweise der Zerkleinerung von Nahrungsmitteln dient, Fluide zu homogenen Schäumen zu verarbeiten. Desweiteren müssen diese Mischaufsätze leicht zu wechseln und, insbesondere deren Aufnahmen, gut zu reinigen sein.

Derartige Mischaufsätze sind bekannt, indem spezielle Werkzeuge in Form von sog. Schnee- oder Rührbesen separat auf die Antriebswelle ohne Schlagmesser aufgesetzt werden. Es ist auch bekannt, Rührmesseraufsätze für Mixer zu verwenden, die Kamm- oder Lochstrukturen zeigen.

Hierbei ist es nachteilig, daß erartige Rührmesseraufsätze nur gering homogenen Schaum erzeugen und durch die konstruktive Beschaffenheit, insbesondere bei den beheizbaren Haushaltsmixern, das Anbrennen des Kochguts fördern. Ein weiterer Nachteil zeigt sich durch konstruktions- und halterungsbedingte Mixgutablagerungen, die eine schlechte Reinigung zulassen.

Aufgabe der Neuerung ist es daher, unter Vermeidung der vorgenannten Nachteile, einen gut wechselbaren und selbstreinigenden Mischaufsatz und dessen Steckaufnahme für einen Messereinsatz eines, insbesondere beheizbaren, Haushaltsmixers zu schaffen, der Fluide zu einem sehr homogenen Schaum bearbeitet und der Anbrennen des Mixgutes im Heizbetrieb verhindert.

Diese Aufgabe wird neuerungsgemäß durch die Ausgestaltung nach Anspruch 1 gelöst. In den folgenden Ansprüchen sind vorteilhafte Weiterbildungen beschrieben.

Bei dieser Ausgestaltung ist es vorteilhaft, daß mittels der neuerungsgemäßen Merkmale das Fluid eine äußerst homogene Konsistenz bei bester Durchmischung erreicht. Darüber hinaus wird eine sehr gute Durchmischung des Mixgutes sowohl bei Aufschlagen, als auch beim Heizen von außen erzielt, sodaß beim Heizen ein Anbrennen des Mixgutes bei niedrigen Drehzahlen vermieden wird. Ein weiterer Vorteil bietet sich durch die leichte Entnehmbarkeit und die Selbstreinigung der Aufnahme bei Betrieb

Nachfolgend ist die Neuerung in den Zeichnungen dargestellt und anhand eines Beispiels beschrieben.

Es zeigen:

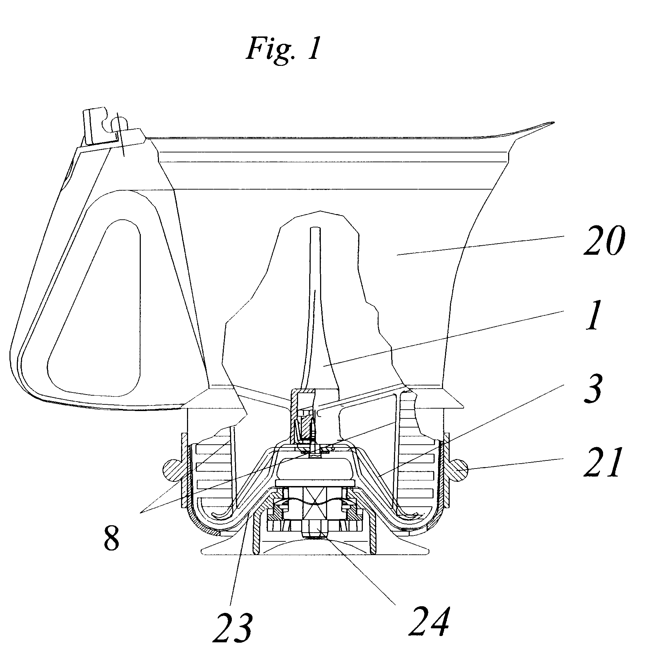

- Fig. 1: Den systematischen Aufbau eines Mixguttopfes mit eingesetztem Mixgutmesser und darauf aufgesetztem Mischgutaufsatz.
- Fig. 2: Eine Frontansicht des rotationssymmetrischen Mischgutaufsatzes mit einemTeilschnitt, der die Teile der Steckaufnahme zeigt.
- Fig. 3: Eine Seitenansicht des Mischgutaufsatzes nach Fig. 2, in der die Lamellen und die leitflächenartigen Stege dargestellt sind.
- Fig. 4: Eine Draufsicht des Mischgutaufsatzes, entsprechend der Fig. 2 und 3.
- Fig. 5: Die Darstellung eines Mixermessers als Draufsicht.
- Fig. 6: Die Darstellung eines Mixermessers in Seitenansicht, wobei die Steckaufnahme als Detailschnitt gezeigt ist.
- Fig 7.: Die Vergrößerung des Detailschnitts nach Fig. 6, die den Aufbau der Steckaufnahme zeigt.

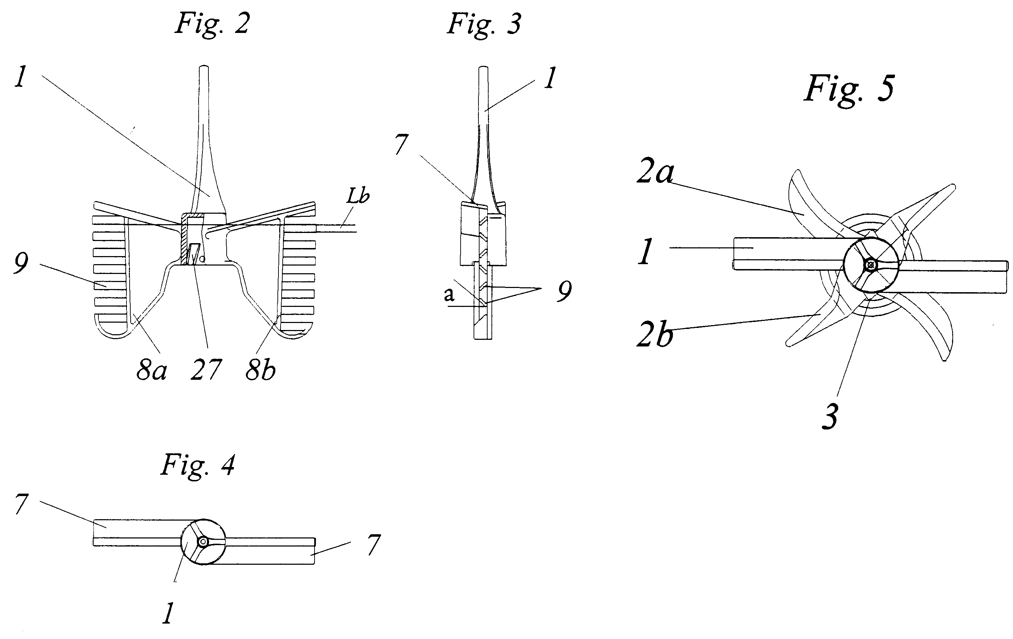

Der Mischaufsatz (1) für den Messereinsatz (3) dient zum Schlagen von Sahne und/oder Eiweiß, die eine möglichst hohe Konsistenz haben und eine homogene Schaumstruktur bilden muß. Demzufolge sind die in den Fig. 2 und 3 dargestellten Lamellen (9) rotationsaußenseitig am Mischaufsatz (1) vorgesehen.

Diese Lamellen (9) arbeiten in das aufzuschäumende Fluid Luft ein und sind zu diesem Zweck jeweils unter einem Winkel (α) von 45° gegeneinander spiegelsymmetrisch angeordnet (gezeigt in Fig. 3). Diese schräg in die Strömung gestellten Lamellen (9) wirken als Hindernis für das an der Topfwand hochsteigende Fluid, wobei eine abgelöste Strömung hinter der Lamelle (9) verursacht wird. D.h., das Fluid wird hinter der Lamelle (9) aufgerissen und Luft um die Wirbelstraße eingeschlossen.

Durch die ständig rotierende Bewegung der Schneidmessers (2a,2b) und dem damit steckeinheitlich verbundenen Mischaufsatz (1) wird ein immer größerer Volumenanteil von Luft eingearbeitet, bis ein homogener Schaum entstanden ist. Die Lamellen (9) sind auf den sich gegenüberliegenden Seiten (8a,8b,) der Rotationsenden (8) nicht höhengleich angeordnet, sondern jeweils um eine Lamellenbreite (Lb) gegeneinander versetzt.

Hierdurch wird bei jeder halben Umdrehung des Mischaufsatzes (1) die im Schaum durch die Lamellen (9) gezogene Kontur aufgebrochen und neu gebildet und somit eine sehr homogene Konsistenz erreicht.

Nach Fig. 3 und 4 sind zwei schräg gestellte Leitflächen (7) im oberseitigen Bereich des Mischaufsatzes (1) angebracht, die den Schaum ständig in den Verarbeitungsbereich zurückzwingen.

In dem Mixguttopf (20), der über eine Heizung (21) - hier beispielhaft dargestellt - beheizt werden kann, sind zentrisch die Mixermesser (2a,2b) an einem Messereinsatz (3), welchr auf einer Antriebswelle (22) befestigt ist, angeordnet. Dieser Messereinsatz (3) ist lösbar auf einer topfbodenseitigen, domartigen Erhebung (23) des Mixguttopfes (20) verschraubt, wobei außerhalb des Mixguttopfes (20) endseitig am Messereinsatz (3) ein Mitnehmer (24) steckbar in eine -nicht dargestellte- Abtriebswelle eines geräteseitigen Motors eintaucht.

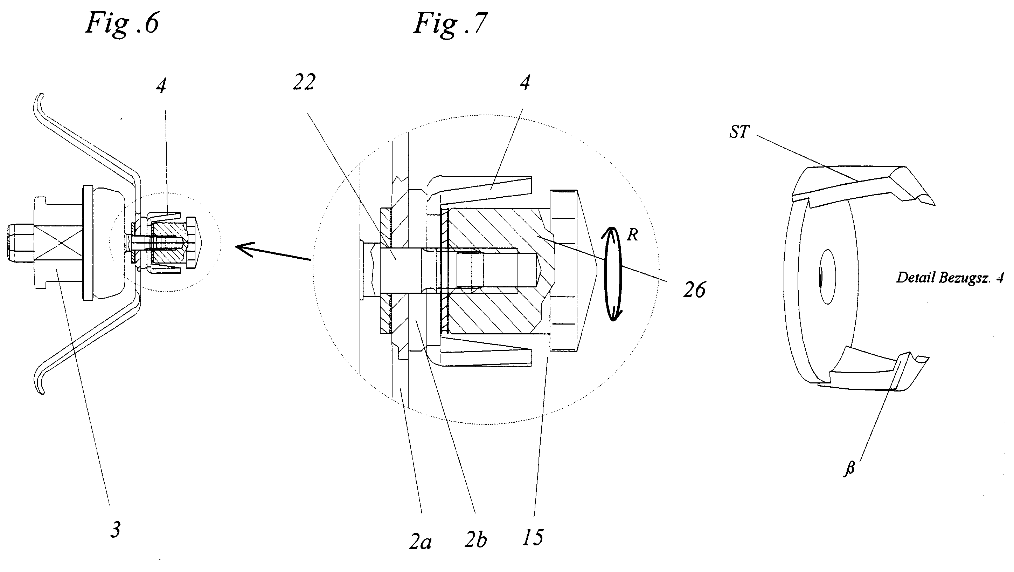

Im Mixguttopf (20) ist der konturangepaßte Messereinsatz (3) (nach Fig. 5 und 6) auf der Antriebswelle (22) festgelegt und trägt zentrisch oberhalb der Schneidmesser (2a,2b) die Steckaufnahme (4), die in den Fig. 6 und 7 verdeutlicht ist.

Nach Fig. 7 sind die, an der Steckeraufnahme (4) angeordneten Verbindungsstege (12,13), die eine räumliche Steigung (ST) in Drehrichtung (R) der Mixermesser (2a,2b) zeigen, mit der Mutter (26) auf der Antriebswelle (22) befestigt.

Auf diese Verbindungsstege (12,13) wird der Mischaufsatz (1), der steigungsidentisch innenliegende Gegenstücke (27) zu den Verbindungsstegen (12,13) aufweist, bajonnettförmig aufgesetzt und während des Betriebs gehalten. Hierbei ragen die Rotationsseitenenden (8a,8b) durch die offenräumig angeordneten Schneidmesser (2a,2b) vertikal hindurch in die bodenseitige Kontur des Mixguttopfes (20), um eine gute Durchmischung zu erzielen.

Bedingt durch die längenangepaßte Formgebung zwischen Verbindungsstegen (12,13) und der Gegenstücke (27) bildet sich ein Freiraum (28) zwischen Mutter (26), Verbindungsstegen (12,13) und Mischaufsatz (1), sodaß eine sog. Selbstreinigung des Bereichs durch Durchströmung bei Rotation des Messereinsatzes (3) und des aufgesetzten Mischaufsatzes (1) erzielt wird.

Zur Vermeidung von Verletzungen bei der Entnahme des Mischaufsatzes (1) von der Steckaufnahme (4) können die frei liegenden Enden (12a,13a) der Verbindungsstege (12,13) unter dem Winkel (β) abgewinkelt sein. Dieser legt die Enden (12a,13a) unter einen Abdeckkragen (15) der Mutter (26).

## Patentansprüche

1. Mischaufsatz (1) für einen Messereinsatz (3) für Haushaltsmixgeräte, insbesondere Kochmixgeräte, mittels dem Sahne- und/oder Eiweiß aufgeschlagen wird, indem Luft in das Fluid eingearbeitet und eine homogene Konsistenz erzeugt wird, dadurch gekennzeichnet daß oberhalb der Schneidmesser (2a, 2b) eine formschlüssig dem Messereinsatz (3) verbindungseinheitliche zugeordnete Steckaufnahme (4) zur drehrichtungsabhängigen und selbstarretierenden Aufnahme des Mischaufsatzes (1) angeordnet ist.

2. Mischaufsatz für den Messereinsatz nach Anspruch 1, dadurch gekennzeichnet, daß sich der Mischeinsatz (1) rotationssymmetrisch zu beiden Seiten der Messerachse (5) vertikal durch die Schneidmesser (2a,2b) erstreckt.

3. Mischaufsatz für den Messereinsatz nach Anspruch 1 oder Anspruch 2, dadurch gekennzeichnet, daß die außenseitigen Rotationsenden (6) des Messereinsatzes (3) leitflächenähnliche Stege (7) aufweisen.

4. Mischaufsatz für den Messereinsatz nach Anspruch 1 oder Anspruch 2, dadurch gekennzeichnet, daß die außenseitigen Rotationsenden (8) eine Vielzahl achsrichtungsfluchtenden Lamellen (9) aufweisen.

5. Mischaufsatz für den Messereinsatz nach Anspruch 4, dadurch gekennzeichnet, daß die Lamellen (9) jeweils einen Winkel (α) von 45° schräg zur Strömungsrichtung (SR) gegeneinander spiegelsymmetrisch zeigen.

6. Mischaufsatz für den Messereinsatz nach Anspruch 5, dadurch gekennzeichnet, daß die Lamellen (9) an den beidseitigen Rotationsenden (8) um jeweils eine Lamellenbreite (10) gegeneinander versetzt ausgebildet sind.

7. Mischaufsatz für den Messereinsatz nach Anspruch 1, dadurch gekennzeichnet, daß die Steckaufnahme (4) zwischen Rotationsachse (11) und Verbindungsstegen (12,13) einen Freiraum (14) bildet.

8. Mischaufsatz für den Messereinsatz nach Anspruch 6, dadurch gekennzeichnet, daß die Verbindungsstege (12,13) eine räumliche Steigung in Drehrichtung (R) zeigen.

9. Mischaufsatz für den Messereinsatz nach Anspruch 6, dadurch gekennzeichnet, die Verbindungsstege (12,13) endseitig eine bis unter einen Abdeckkragen (15) reichende, Abwinkelung (β), aufweisen.
